# EUROPEAN PATENT SPECIFICATION

(11) **EP 2 541 969 B1**
(45) Date of publication and mention of the grant of the patent: **05.03.2014**
(21) Application number: 11305824.2
(22) Date of filing: 28.06.2011
(51) Int. Cl.: H04Q 11/00

(54) **Optical packet switch**
Optischer Paketvermittler
Commutateur de paquets optiques

(43) Date of publication of application: 02.01.2013
(73) Proprietor: Alcatel Lucent, 75007 Paris (FR)
(72) Inventor: Zami, Thierry, 91620 Nozay (FR)
(74) Representative: Sciaux, Edmond

(56) References cited:
- EP-A2- 0 759 681
- US-B1- 6 549 313
- BERNASCONI P ET AL: "Optical switch fabrics for ultra-high-capacity IP routers", JOURNAL OF LIGHTWAVE TECHNOLOGY, IEEE SERVICE CENTER, NEW YORK, NY, US, vol. 21, no. 11, 1 November 2003 (2003-11-01), pages 2839-2850, XP011103961, ISSN: 0733-8724, DOI: 10.1109/JLT.2003.819150
- XIN LI ET AL: "Analysis of reduced rate scheduling for switches with reconfiguration overhead", GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 5, 1 December 2003 (2003-12-01), pages 2782-2786, XP010677618, DOI: 10.1109/GLOCOM.2003.1258742 ISBN: 978-0-7803-7974-9

## Description

The technical domain is the domain of communication networks. More particularly the invention concerns, in a packet transmission network, an optical packet switch able to receive packets in electronic form through input ports, to optically switch and redirect these packets, and to transmit these packets in electronic form through output ports.

The invention is mainly directed to an arrangement allowing to drastically reducing the time needed to coherently receive optical packets at the output ports, in order to be able to switch packets at very high speed of at least 100 Gbit/s.

In the communication networks domain, requirements, mainly in terms of high throughput and low latency, are growing every day. To benefit of increased transport throughput, all network components must be scaled up, and especially the most flexible component, that is, packet switch. In order to cope with such increasing requirements, optical packet switching appears to be a promising technology, since, among other advantages, optics offer, over electronics, an increased bandwidth.

A prior art optical packet switch is for example disclosed in document: BERNASCONI P ET AL: "Optical switch fabrics for ultra-high-capacity IP routers", Journal of lightwave technology, IEEE service center, New York, US, vol. 21, no. 11, 1 November 2003, pages 2839-2850, ISSN: 0733-8724.

Optical coherent detection, as may be used in an optical coherent reception demodulator located at an output port, also appears to be a promising technology able to reach quality requirements induced by such very high speed.

As is known, the principle of coherent detection is based on realization of optical interferences. To demodulate a received signal, coherent detection needs a precise optical frequency source, also named local oscillator. Said optical frequency source must exhibit a fixed optical frequency as close to the optical frequency used to modulate said received signal as to be able to produce interferences when superimposing said optical frequency source and said received signal. This principle requires a very precisely tuned optical frequency source. Known optical coherent reception demodulators are able to automatically tune their local oscillator based on an observation of the received signal. However, such an automatic tuning is time consuming and partially consumes the beginning of a received packet (packet preamble) that cannot be dedicated to useful payload. The more the local oscillator is initially detuned, the more the tuning process is time consuming.

These two drawbacks are very prejudicial to either the increasing of throughput or to the decreasing of latency.

An embodiment of the present invention addresses and solves these problems, in order to allow increased throughput and decreased latency, by providing a common shared optical frequency, to any optical transmission modulator and to any optical coherent reception demodulator that may be linked together, in at least one switching configuration.

Such arrangement guarantees, for each optical coherent receiver, an always tuned local oscillator, leading to a drastic reduction of both the optical coherent reception convergence time and the packet preamble size.

The object of one embodiment is an optical packet switch, comprising a first plurality of input ports each input port comprising an optical transmission modulator, a second plurality of output ports each output port comprising an optical coherent reception demodulator, and an optical switching fabric able to selectively optically link at least one input port to at least one output port, further comprising at least one optical frequency source connected through a transmit optical path to a set of input ports in order to provide their optical transmission modulators with a modulation optical frequency, and also connected through a receive optical path to a set of output ports in order to provide their optical coherent reception demodulators with a demodulation optical frequency generally equal to said modulation optical frequency, wherein said set of input ports comprises all input ports that may be linked through said optical switching fabric, in at least one of its switching configuration, to at least one output port of said set of output ports, and wherein said set of output ports comprises all output ports that may be linked through said optical switching fabric, in at least one of its switching configuration, to at least one input port of said set of input ports.

According to another embodiment, said transmit optical path and said receive optical path are such that the travelling time through said receive optical path is equal to the travelling time through said transmit optical path plus the travelling time through the optical switching fabric.

According to another embodiment, transmit optical paths and receive optical paths are polarization maintaining.

According to another embodiment, input ports are gathered into input groups of a given number n of input ports, each i^{th}, i=1..n, input port signal of each of said input groups being modulated according to a separate modulation optical frequency, each said input group comprising an optical frequency multiplexer able to multiplex all input port signals of said input group, into a multiplexed optical signal, wherein the optical switching fabric is designed to switch said multiplexed optical signals, and output ports are gathered into output groups of same given number n of output ports, each i^{th}, i=1..n, output port signal of each of said output groups being demodulated according to a corresponding demodulation optical frequency, each said output group comprising an optical frequency demultiplexer able to demultiplex a multiplexed optical signal into all output port signals of said output group, wherein said optical packet switch comprises at least one optical frequency source associated to each optical frequency.

According to another embodiment, the optical switching fabric comprises p similar optical switching matrixes, p at least equal to two, connected in parallel to said first plurality of input ports through optical frequency multiplexers, and to said second plurality of output ports through optical frequency demultiplexers, where n is the degree of wavelength division multiplexing, said optical switching matrixes being controlled to operate alternately, where one optical switching matrix switches while others matrixes transmit.

According to another embodiment, each optical switching matrix uses the same grid of modulation/demodulation optical frequency, optical switching matrixes are connected in parallel to said first plurality of input ports through n x 1 optical frequency multiplexers and 1 x p couplers, and to said second plurality of output ports through 1 x n optical frequency demultiplexers.

According to another embodiment, each optical switching matrix uses a different grid of modulation/demodulation optical frequency, wherein optical switching matrixes are connected in parallel to said first plurality of input ports through n x p optical frequency multiplexers, and to said second plurality of output ports directly through p x n optical frequency demultiplexers.

According to another embodiment, each optical frequency source comprises one primary continuous wave laser optical frequency source and at least one secondary continuous wave laser optical frequency source of the same frequency, said at least one secondary continuous wave laser optical frequency source being ready to replace said principal continuous wave laser optical frequency source, in case of failure.

According to another embodiment, a transmit optical path, respectively a receive optical path, comprises a primary length of optic fibre from an optical frequency source to at least one optical splitter mean followed by a plurality of secondary lengths of optic fibre from said optical splitter mean to said plurality of input ports, respectively output ports, and at least one polarization maintaining amplifier, located in said secondary lengths of optic fibre.

Another object is a method of using such an optical packet switch, using polarization division multiplexing.

Others features, details and advantages of the invention will become more apparent from the detailed illustrating description given hereafter with respect to the drawings on which:
- figure 1 is a schematic view of a prior art optical packet switch,
- figure 2 is a schematic view detailing a possible embodiment of an optical switching fabric,
- figure 3 a is schematic view of an optical packet switch according to an embodiment of the invention,
- figure 4 is a schematic view of a prior art optical packet switch using wavelength division multiplexing,
- figure 5 is a schematic view of an optical packet switch according to an embodiment of the invention applied to an optical packet switch using wavelength division multiplexing,
- figure 6 is a schematic view of an optical packet switch using multiple switching matrixes,
- figure 7 is a schematic view of an optical packet switch according to another embodiment of the invention using multiple switching matrixes,
- figure 8 is a schematic view of an optical packet switch according to another embodiment of the invention using multiple switching matrixes.

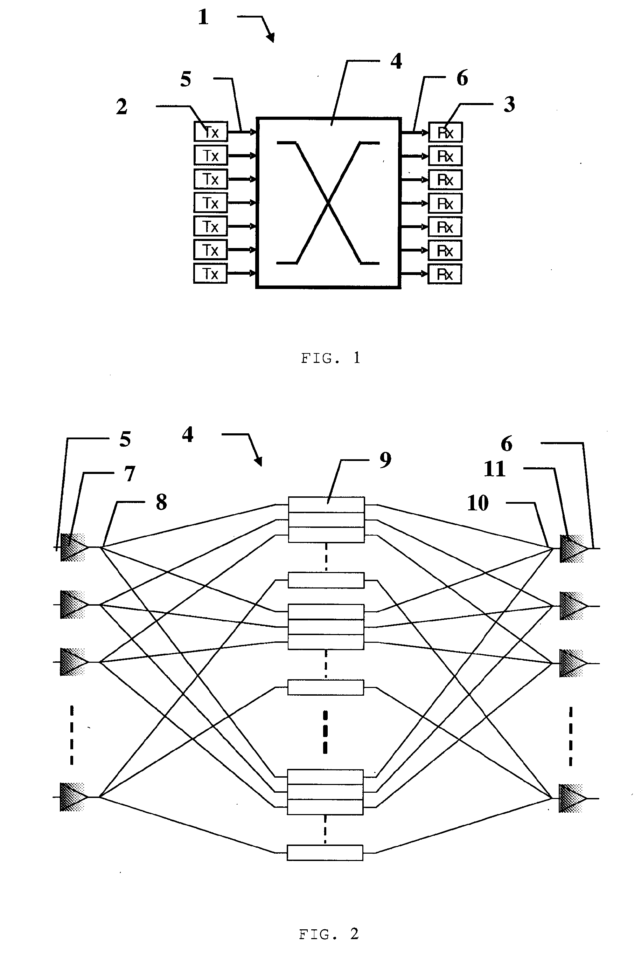

According to figure 1, an optical packet switch 1 comprises a first plurality of input ports 2, located on the left of the figure. Each input port 2 comprises an optical transmission modulator. Said optical transmission modulator receives an input signal in electronic form. The connexion between input port 2 and a provider of said input electronic signal is not figured in order to simplify the figure. Said optical transmission modulator is able to and is in charge of translating said input electronic signal into an input optical signal 5. Said translation is done by modulating the amplitude and/or the phase of a continuous optical signal according to the said electronic signal to get the said input optical signal 5. The obtained input optical signal 5 is transmitted to an optical switching fabric 4, in order to be optically switched.

According to figure 1, said optical packet switch 1 further comprises a second plurality of output ports 3, located on the right of the figure. Each output port 3 comprises an optical coherent reception demodulator. Said optical coherent reception demodulator receives from said optical switching fabric 4 an output signal 6 in optical form. Said optical coherent reception demodulator is able to and is in charge of translating said output optical signal 6 into an output electronic signal. Said translation is done by coherent reception demodulating. Said coherent reception demodulation uses an optical demodulation optical frequency to demodulate said output optical signal 6 into said output electronic signal. The obtained output electronic signal is transmitted to an output port 3. The connexion between output port 3 and a receiver of said output electronic signal is not figured in order to simplify the figure.

According to figure 1, said optical packet switch 1 further comprises an optical switching fabric 4. Said optical switching fabric 4 is able to optically link at least one input port 2 to at least one output port 3. Said optical switching fabric 4 is operated by a control device (not figured) to selectively connect any at least one input port 2 to any at least one output port 3. By doing so, an input signal, present at any input port 2, can be switched and thus directed to any output port 3.

The number of input ports 2 and the number of output ports 3 are not necessary equal.

The optical packet switch 1 is intended to switch packets. It is then more efficient to switch packets with common duration, also called time slot, on a synchronous way. It implies that all the commutations needed to change a switching configuration must be applied during the time slot in between two successive packets. For multiplexing efficiency purpose this time slot should better be quite short, for instance less than 10 percent of the whole packet duration.

Figure 2 shows a possible embodiment of said optical switching fabric 4. Said optical switching fabric 4 is connected between input ports, located on the left of the figure, from which it receives input signals 5, and output ports, located on the right of the figure, to which it delivers output signal 6.

From left to right, each input signal 5 is duplicated through an optical splitter 8. Let us consider a number I of input ports/signals 5 and a number O of output ports/signals. Each input signal is duplicated O times. Each so duplicated input signal is sent to an optical gate 9. Said gate 9 is selectively able to be in two states: blocked or passing. According to one possible operating mode, one gate 9 is controlled to be passing while all the other gates 9 are controlled to be blocked. This links one input port to one output port. With other gates 9 controlled to be passing duplication of input signals to several output ports is also possible.

According to one embodiment, said two states function can be obtained using a semiconductor optical amplifier, SOA. Said component is interesting in that it can commute from one state to the other very quickly (less than 2 ns).

Direct detection used in prior art applications, is no longer optimal when the data modulation speed of a packet exceeds 20 Gb/s, particularly owing to the degraded sensitivity to optical noise. Coherent detection is considered to be an interesting approach when modulation speeds increase. Moreover, the principle of the invention only applies to coherent detection.

As is known, the principle of coherent detection is based on realization of optical interferences. To demodulate an optical received signal 6, coherent detection needs a precise optical frequency source, also named local oscillator. Said optical frequency source must exhibit a fixed optical frequency as close to the optical frequency used to modulate said received signal as to be able to produce interferences when superimposing said optical frequency source and said received signal. This principle requires a very precisely tuned optical frequency source. Known optical coherent reception demodulators are able to automatically tune their local oscillator based on an observation of the received signal. However, such an automatic tuning is time consuming and partially consumes the beginning of a received packet (packet preamble) that cannot be dedicated to useful payload. The more the local oscillator is initially detuned, the more the tuning process is time consuming. Most of all, over a given detuning, typically over 0.2 nm difference in wavelength, the tuning process becomes impossible.

In order to gain time, according to a main feature of the invention, a common optical frequency, is shared between any optical transmission modulator and any optical coherent reception demodulator that may be linked together, in at least one switching configuration.

Such arrangement guarantees, that each optical coherent receiver, is provided with a demodulation optical frequency that is equal to the modulation optical frequency used by the optical transmission modulator that modulated the signal it receives. Said external demodulation optical frequency provides to the optical coherent receiver an always and anytime perfectly tuned local oscillator. Said tuning allows a drastic reduction of both the optical coherent reception convergence time and the packet preamble size.

This can be obtained by adding into said optical packet switch 1, at least one optical frequency source 12. Said at least one optical frequency source 12 is connected through a transmit optical path 13 to a set of input ports 2 in order to provide their optical transmission modulators with a modulation optical frequency. So, instead each optical transmission modulator has its own modulation optical frequency source independently tuned, all optical transmission modulators of the same set of input ports 2 connected to the same transmit optical path 13, share a same modulation optical frequency externally delivered by one optical frequency source 12.

Additionally, said at least one optical frequency source 12 is connected through a receive optical path 14 to a set of output ports 3 in order to provide their optical coherent reception demodulators with a demodulation optical frequency. So, instead each optical coherent reception demodulator has its own demodulation optical frequency source independently tuned, all optical coherent reception demodulators of the same set of output ports 3 connected to the same receive optical path 14, share a same demodulation optical frequency externally delivered by one optical frequency source 12.

Most of all, this guarantees that any given optical coherent reception demodulator receives a demodulation optical frequency generally equal to the modulation optical frequency used by the optical transmission modulator it is connected to. By doing so, an optical coherent reception demodulator demodulates a received signal with a demodulation optical frequency generally equal to the modulation optical frequency used by the corresponding optical transmission modulator to modulate said signal.

Said optical frequency equality must be guaranteed whatever the switching configuration of the optical switching fabric 4. Said set of input ports 2 comprises all input ports 2 that may be linked through said optical switching fabric 4, in at least one of its switching configuration, to at least one output port 3 of said set of output ports 3. Additionally, said set of output ports 3 comprises all output ports 3 that may be linked through said optical switching fabric 4, in at least one of its switching configuration, to at least one input port 2 of said set of input ports 2.

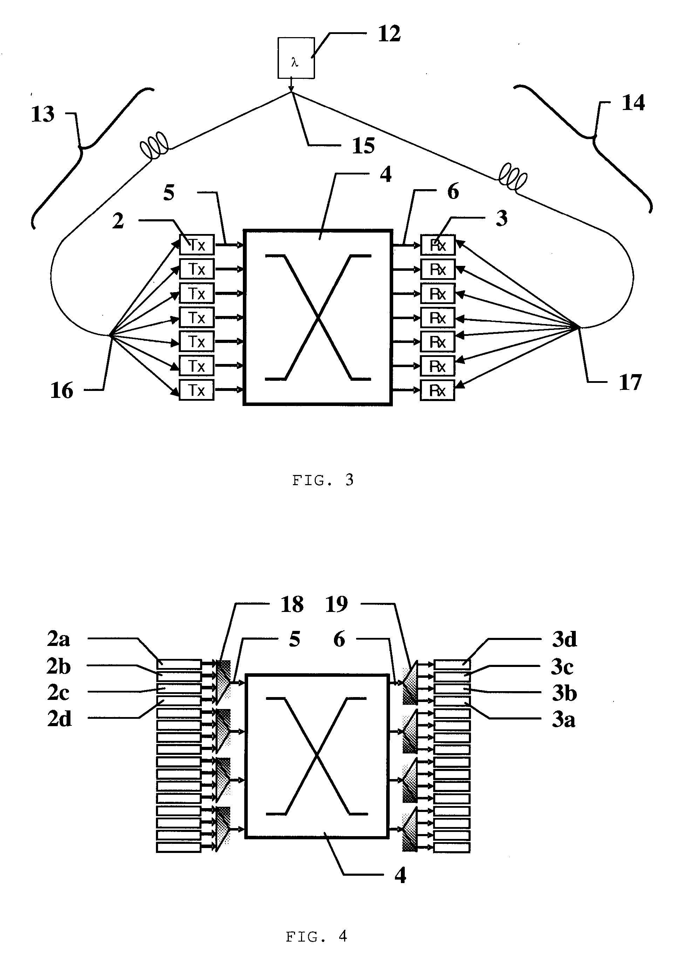

Figure 3 shows an embodiment of the invention. The optical switching fabric 4 is the same as the one showed on figure 1. It is supposed that any input port 2 may be linked, through at least one configuration of the optical switching fabric 4, with any output port 3, and that any output port 3 may be linked, through at least one configuration of the optical switching fabric 4, with any input port 2. Consequently the set of input port 2 comprises all input ports 2 and the set of output port 3 comprises all output ports 3. Only one optical frequency source 12 is needed. The transmit optical path 13 delivers the common optical frequency λ to all input ports 2 and the receive optical path 14 delivers the common optical frequency to all output ports 3.

It is of great importance that the optical frequency delivered to an optical transmission modulator is close to the optical frequency delivered to an optical coherent reception demodulator. To help obtain said feature, it is advantageous to have both travelling paths of the optical received modulated signal and the optical demodulation frequency comparable with respect to any frequency shift.

In others words, it is advantageous to have the optical received modulated signal path, that is the transmit optical path 13 plus the path through the optical switching fabric 4 being comparable to the optical demodulation frequency path, that is the receive optical path 14. One way to have a travelling time through said receive optical path 14 close or equal to the travelling time through said transmit optical path 13 plus the travelling time through the optical switching fabric 4, may be to use adapted path lengths. For this purpose, travelling time through the optical switching fabric 4 may considered to be equal whatever the switching configuration.

As a known result of the coherent detection principle, an optical coherent reception demodulator needs a fixed angle between the polarization state of the optical demodulation frequency (or local oscillator) and one of its internal components: its static polarizers. This may be obtained by using a receive optical path 14 that is polarization maintaining. Said receive optical path 14 mainly comprises lengths of optical fibre, and optical splitters 15, 17. Both optical fibre lengths and optical splitters 15, 17 are advantageously polarization maintaining.

Similarly the axis of an optical transmission modulator should exhibit polarization state aligned with the optical frequency source 12. This may be obtained by using a transmit optical path 13 that is polarization maintaining. Said transmit optical path 13 mainly comprises lengths of optical fibre, and optical splitters 15, 16. Both optical fibre lengths and optical splitters 15, 16 are advantageously polarization maintaining.

A way to increase the capacity of an optical network element, and among other of an optical packet switch, is to use wavelength division multiplexing, WDM. When using WDM, the optical bandwidth is parted into a given number n of separated wavelengths. Said n wavelength are then multiplexed and are switched as a single optical signal. The number n may be called the diversity degree. According to a particular embodiment, a packet, which is the minimum switching unit, may be parted in n sub-packets, each of which is then sent over one input port. This allows the total duration of treatment of a packet by an optical packet switch to be divided by a factor n. The throughput capacity of an optical packet switch is thus increased by a factor n.

When n=1, a switch reproduces the embodiment of figures 1 and 2. In that particular case, multiplexers 18, 25 and demultiplexers 19, 26 are not needed.

Before reaching other technological limitations, n can be increased up to few tens of wavelengths.

Figure 4 shows a typical optical packet switch 1 using the WDM feature. For clarity of illustration purpose, a reduced number of n=4 has been used. The optical packet switch 1 comprises a plurality of input ports 2, a plurality of output ports 3 and an optical switch fabric 4.

Said input ports 2 are gathered into input groups of a given number n of input ports 2. E.g. in figure 4, input ports 2a-2d pertains to the same input group. In a given input group all n input port signals are modulated according to separate modulation optical frequencies λᵢ, i=1..n. Said modulation optical frequencies may advantageously be organised according to a regularly spaced grid of optical frequencies. The optical packet switch 1 comprises, for each said input group an optical multiplexer 18, 25. All input port signals of an input group are multiplexed into a single input multiplexed optical signal 5, through said optical multiplexer 18, 25.

In such embodiment, the optical switching fabric 4 is designed to switch said multiplexed optical signals 5. The optical switching fabric 4 thus outputs output multiplexed optical signals 6 similar to input multiplexed optical signals 5.

On the output side, figured on the right of the figure, output ports 3 are into output groups of same given number n of output ports 3. E.g. in figure 4, output ports 3a-3d pertains to the same output group. In a given output group all n output port signals are demodulated according to separate demodulation optical frequencies λᵢ, i=1..n. Said demodulation optical frequencies are the same as the modulation optical frequencies λᵢ, i=1..n. The optical packet switch 1 comprises, for each said output group an optical demultiplexer 19, 26. An output multiplexed optical signal 8, outputting from said optical switching fabric 4, is demultiplexed into all output port signals of an output group, through said optical demultiplexer 19, 26.

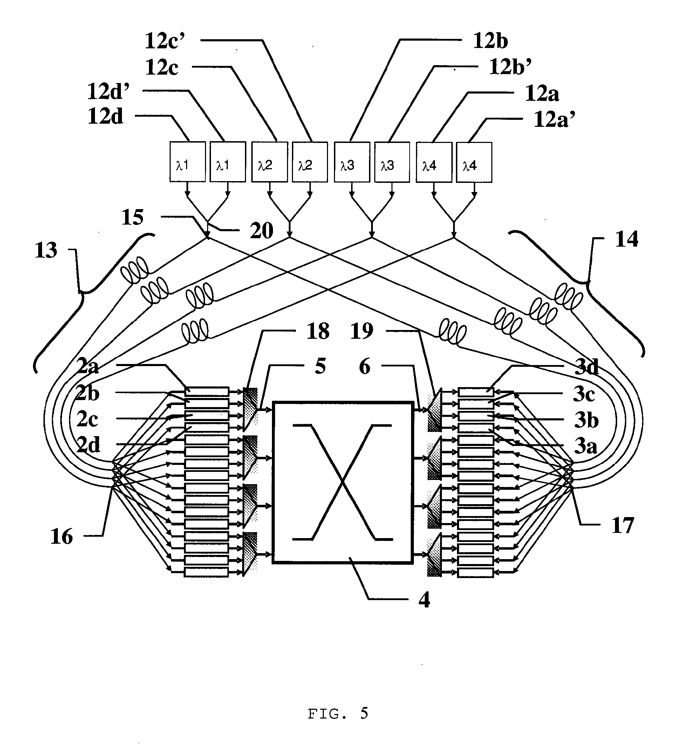

Figure 5 shows an embodiment of the invention applied to the optical packet switch 1 of figure 4. In each input group, respectively output group, each i^{th} input port signal, i=1..n, respectively i^{th} output port signal, is to be modulated, respectively demodulated, according to a separate modulation optical frequency λᵢ. The number of said optical frequencies is equal to the diversity degree n.

Due to the switch architecture, the i^{th} input port, i=1..n, of any input group may be linked to any of the i^{th} output port, i=1..n, of any output group. On the contrary, since their optical frequencies are different, an i^{th} input port, i=1..n, of any input group may NEVER be linked to any of the j^{th} output port, j=1..n and j≠i, of any output group, whatever the switching configuration.

With the meaning previously defined, such an embodiment exhibits a number n of sets of input ports 2, each set comprising the it^{h} input ports of all input groups, i=1..n, and corresponding n sets of output ports 3, each set comprising the i^{th} output ports of all output groups, i=1..n.

The optical packet switch 1 thus comprises n optical frequency sources 12a-12d each associated to one optical frequency λᵢ, i=1.. n, chosen among the optical frequencies of the WDM grid. The i^{th}, i=1..n, optical frequency source, e.g. 12a, delivers its optical frequency λᵢ, through an i^{th} transmit optical path 13, to all i^{th} input ports, e.g. 2a, of a input set, and through an i^{th} receive optical path 14, to all corresponding i^{th} output ports, e.g. 3a, of a corresponding output set.

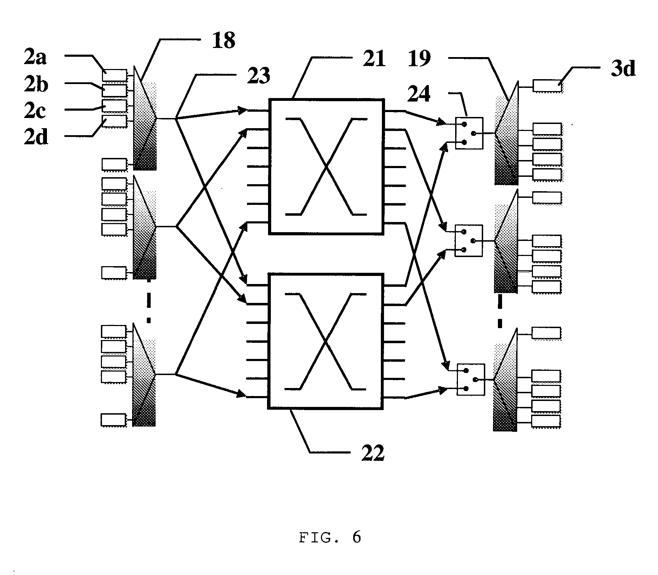

Figures 6, 7 and 8 show three other embodiments of an optical packet switch whose optical switching fabric 4 comprises p similar optical switching matrixes 21, 22. Another way of improving the throughput of an optical packet switch 1 is to have an optical switching fabric 4 comprising p, p being at least equal to two, optical switching matrixes 21, 22. According to said embodiments, the several optical switching matrixes 21, 22 are controlled to operate alternately. During a first time slot, a first optical switching matrix 21, 22 switches, while others matrixes 21, 22 transmit. During a second time slot, a second optical switching matrix 21, 22 switches, while others matrixes 21, 22 transmit. And so on periodically, with as much time slots as there is optical switching matrix 21, 22, that is p time slots/switching matrixes. Such embodiments advantageously allow masking some switching durations and allows an improved throughput capacity for the optical packet switch 1.

Said several optical switching matrixes 21, 22 can be similar between them. They can each be implemented using an optical switching matrix similar to the one illustrated on figure 2.

All of these optical switching matrixes 21, 22 are connected in parallel to the first plurality of input ports 2 and to the second plurality of output ports 3. This means that the i^{th} input ports of each optical switching matrixes 21, 22, are connected to the i^{th} input port 2 of the optical packet switch 1, and that the i^{th} output ports of each optical switching matrixes 21, 22, are connected to the i^{th} output port 3 of the optical packet switch 1.

In the following sections, n is (still) the diversity degree or the degree of wavelength division multiplexing, WDM, and p is the number of optical switching matrixes 21, 22.

In the embodiment of figure 6, all switching matrixes 21, 22, use the same optical frequency grid. That is a given i^{th}, i= 1..n, input/output port is modulated/demodulated according to an optical frequency λᵢ that is always the same, not depending on the time slot or on which switching matrix is currently switching. The input ports 2 parallel connexion can be done, as illustrated at figure 6, using WDM n x 1 multiplexers 18, followed by optical 1 x p splitters 23..Rather symmetrically, the output ports 3 parallel connexion can be done, as illustrated at figure 6, using WDM 1 x n demultiplexers 19. As illustrated, said demultiplexers 19 must be preceded by quick operating p x 1 switches 24. These p x 1 switches 24 must be operated according to said time slots in order to differentiate a signal going through one optical switching matrix 21, 22 from a signal going through another optical switching matrix 21, 22.

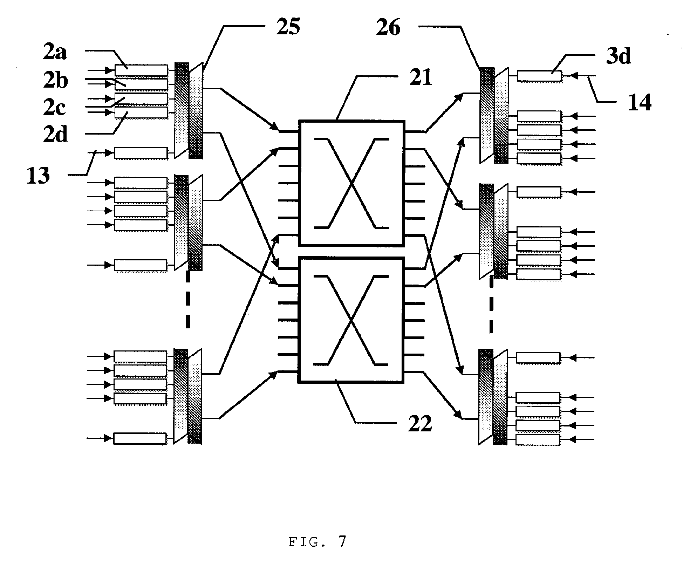

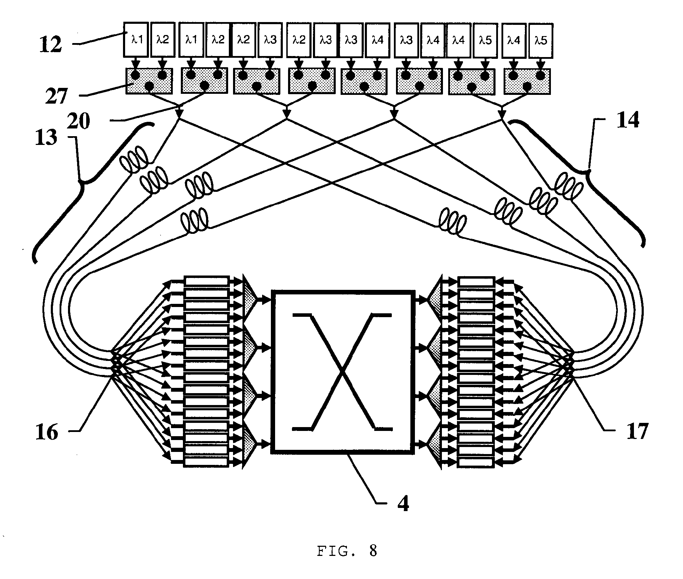

According to the embodiments of figures 7 and 8, a different grid of optical modulation/demodulation frequencies λᵢ, i= 1..n, is used for each switching matrix 21, 22, in order that a given i^{th}, i= 1..n, input port is modulated/demodulated according to an optical frequency λᵢ that is always different for a different switching matrix, depending on the time slot or on which switching matrix is currently switching. This is obtained by periodically changing the modulation/demodulation frequencies λᵢ, i= 1..n, on each switching time slot, with a period of p.

For example several shifted sets of frequencies can be used. As illustrated on figures 7 and 8, the first switching matrix may then process a multiplexed signal comprising in order a first set of frequencies λ₁, λ₂, λ₃, ..., λₙ₋₂, λₙ₋₁, λₙ during a first slot. Then the second switching matrix may process a multiplexed signal comprising in order λ₂, λ₃, ..., λₙ₋₂, λₙ₋₁, λₙ, λₙ₊₁, with λₙ₊₁ being a new frequency, during a second slot. The third switching matrix, if any, may then process a multiplexed signal comprising in order λ₃, ..., λₙ₋₂, λₙ₋₁ λₙ, λₙ₊₁, λₙ₊₂, with λₙ₊₂ being a new frequency. And so on. Advantageously a constant spectral distance is observed between two successive optical frequencies λ₁ and λᵢ₊₁.

According to another example, a (e.g. circular) permutation of the optical frequencies λᵢ can be used. The first switching matrix may then process a multiplexed signal comprising in order λ₁, λ₂, λ₃, ..., λₙ₋₂, λₙ₋₁, λₙ. The second switching matrix may then process a multiplexed signal comprising in order λ₂, λ₃, ..., λₙ₋₂, λₙ₋₁, λₙ, λ₁. The third switching matrix may then process a multiplexed signal comprising in order λ₃, ..., λₙ₋₂, λₙ₋₁, λ_{n,} λ₁, λ₂. And so on.

Since the modulation/demodulation optical frequencies are externally provided by optical frequency sources 12, the frequency change at each time slot may be obtained through at least two sub embodiments. According to a first sub embodiment illustrated on figure 7, on each time slot, optical frequency sources 12 are tuned to the corresponding optical frequency λᵢ. A drawback of such an approach is that each optical frequency tuning may be followed by a transient phase during which the optical frequency is not well established, leading to a dead unusable duration. However, since the same transient phase is present at both an input port and a corresponding output port, according to the main feature of the invention, said dead unusable duration can be drastically reduced.

According to a second sub embodiment, illustrated on figure 8, all optical frequency sources 12 are permanently tuned on a given optical frequency, and the permutation is obtained by mean of fast optical switching means 27, periodically switched on each switching time slot. Said fast optical switches 27 must be able to commute in less than a gap between two successive packets. Said switches 27 must be polarization maintaining. The figure illustrates a case with p=2. Each switch 27 is then able to commute between two different frequencies. According to a previous described feature, each switch 27 with its two associated laser optical frequency sources 12 is duplicated for protection purposes.

In the embodiments of figures 7 and 8, the input ports 2 parallel connexion can be done, as illustrated, using WDM n x p multiplexers 25.

The output ports 3 parallel connexion can advantageously be done, directly through p x n optical frequency demultiplexer 26.

Since the optical frequencies λᵢ are different depending on the active switching matrix, said p x n optical frequency demultiplexers 26 act as optical frequency filters to separate each output signal to the correct output port. Advantageously, this is possible due to a common spectral distance between two successive optical frequencies.

Such embodiment is advantageous in that quick operating switches 24 used in the embodiment of figure 6 are no longer needed.

Another way of improving the throughput capacity of an optical packet switch 1 is based on the modulation used. The prior art NRZ (amplitude modulation) or DPSK, QPSK (phase modulation) have proven their limitations in optical packet switching. For a given modulation data rate, the use in replacement or in addition to phase modulation, of polarization division multiplexing, PDM, allows a lowering of the lowest tolerable optical signal to noise ratio, OSNR, at output of 6dB. Such an OSNR lowering can be directly converted into a quadrupled throughput while maintaining a constant bit error rate, BER. This proves the advantage of using a polarization division multiplexing. Such a polarization division multiplexing can advantageously be received by an optical coherent reception demodulator as the ones used in the invention. Accordingly, any embodiments of the invention may benefit from using a polarization division multiplexing.

As it appears e.g. on figure 5, each optical frequency source 12a-12d is used to deliver a fixed optical frequency to many input ports 2 and to many output ports 3. The risk, in case of a failure of said optical frequency source 12 could be considered as too high. As an answer to said risk, said optical frequency source 12 can be duplicated for protection purpose. In a corresponding embodiment, as illustrated in figure 5, each optical frequency source 12 comprises one primary continuous wave laser optical frequency source 12a-12d and at least one secondary continuous wave laser optical frequency source 12a'-12d' of the same optical frequency. In one possible embodiment, said at least one secondary continuous wave laser optical frequency source 12a'-12d' is ready to replace said principal continuous wave laser optical frequency source 12a-12d, in case of failure. A logic mean may then detect and then power on one of the at least secondary continuous wave laser optical frequency source 12a'-12d', instead of said principal continuous wave laser optical frequency source 12a-12d, when a failure of said is detected. A coupler 20 carries on any of said principal or secondary optical frequency source to the optical paths.

As it appears e.g. on figure 5, each optical frequency source 12a-12d is used to deliver a fixed optical frequency to many input ports 2 and to many output ports 3. Said fixed optical frequency travels through a first optical splitter 15 and then through a transmit optical path 13, and through a receive optical path 14. A transmit optical path 13, respectively a receive optical path 14, typically comprises a primary length of optic fibre from the optical frequency source 12 to at least one optical splitter mean 16, respectively 17, followed by a plurality of secondary lengths of optic fibre from said optical splitter mean 16, respectively 17, to said plurality of input ports 2, respectively output ports 3.

Due to the power level needed at each input port 2, respectively at each output port 3, the initial power level needed for the optical frequency source 12, may largely overcome the available continuous wave laser optical frequency sources. A solution to this problem can be the use of at least one polarization maintaining amplifier. Said polarization maintaining amplifier can advantageously be located in said secondary lengths of optic fibre, in both transmit optical path 13 and receive optical path 14.

## Claims

1. An optical packet switch, comprising a first plurality of input ports (2) each input port (2) comprising an optical transmission modulator, a second plurality of output ports (3) each output port (3) comprising an optical coherent reception demodulator, and an optical switching fabric (4) able to selectively optically link at least one input port (2) to at least one output port (3), ***characterised in that*** said optical packet switch further comprises at least one optical frequency source (12), said optical frequency source (12) being connected through a transmit optical path (13) to a set of input ports (2) in order to provide their optical transmission modulators with a modulation optical frequency, said optical frequency source (12) being also connected through a receive optical path (14) to a set of output ports (3) in order to provide their optical coherent reception demodulators with a demodulation optical frequency generally equal to said modulation optical frequency, wherein said set of input ports (2) comprises all input ports (2) that may be linked through said optical switching fabric (4), in at least one of its switching configuration, to at least one output port (3) of said set of output ports (3), and wherein said set of output ports (3) comprises all output ports (3) that may be linked through said optical switching fabric (4), in at least one of its switching configuration, to at least one input port (2) of said set of input ports (2).

2. The optical packet switch of claim 1, wherein said transmit optical path (13) and said receive optical path (14) are such that the travelling time through said receive optical path (14) is equal to the travelling time through said transmit optical path (13) plus the travelling time through the optical switching fabric (4).

3. The optical packet switch of claim **1** or **2,** wherein transmit optical paths (13) and receive optical paths (14) are polarization maintaining.

4. The optical packet switch of any one of claims **1** to **3,** wherein input ports (2) are gathered into input groups of a given number n of input ports (2), each i^{th}, i=1..n, input port signal of each of said input groups being modulated according to a separate modulation optical frequency (λᵢ), each said input group comprising an optical frequency multiplexer (18, 25) able to multiplex all input port signals of said input group, into a multiplexed optical signal (5), wherein the optical switching fabric (4) is designed to switch said multiplexed optical signals (5), wherein output ports (3) are gathered into output groups of same given number n of output ports (3), each i^{th}, i=1..n, output port signal of each of said output groups being demodulated according to a corresponding demodulation optical frequency (λᵢ), each said output group comprising an optical frequency demultiplexer (19, 26) able to demultiplex a multiplexed optical signal (6) into all output port signals of said output group, wherein said optical packet switch comprises at least one optical frequency source (12, 12a-d)) associated to each optical frequency (λᵢ, i=1..n).

5. The optical packet switch of claim **4,** wherein the optical switching fabric (4) comprises p similar optical switching matrixes (21, 22), p at least equal to two, connected in parallel to said first plurality of input ports (2) through optical frequency multiplexers (18, 23, 25), and to said second plurality of output ports (3) through optical frequency demultiplexers (19, 24, 26), where n is the degree of wavelength division multiplexing, said optical switching matrixes (21, 22) being controlled to operate alternately, where one optical switching matrix (21, 22) switches while others matrixes (21, 22) transmit.

6. The optical packet switch of claim **5,** wherein each optical switching matrix (21, 22) uses the same grid of modulation/demodulation optical frequency (λᵢ), wherein optical switching matrixes (21, 22) are connected in parallel to said first plurality of input ports (2) through n x 1 optical frequency multiplexers (18) and 1 x p couplers (23), and to said second plurality of output ports (3) through 1 x n optical frequency demultiplexers (19) and p x 1 switches (24).

7. The optical packet switch of claim **5,** wherein each optical switching matrix (21, 22) uses a different grid of modulation/demodulation optical frequency (λᵢ), wherein optical switching matrixes (21, 22) are connected in parallel to said first plurality of input ports (2) through n x p optical frequency multiplexers (25), and to said second plurality of output ports (3) directly through p x n optical frequency demultiplexers (26).

8. The optical packet switch of claim **1** to **7,** wherein each optical frequency source (12) comprises one primary continuous wave laser optical frequency source (12a-12d) and at least one secondary continuous wave laser optical frequency source (12a'-12d') of the same optical frequency, said at least one secondary continuous wave laser optical frequency source (12a'-12d') being ready to replace said principal continuous wave laser optical frequency source (12a-12d), in case of failure.

9. The optical packet switch of claim **1** to **8,** wherein a transmit optical path (13), respectively a receive optical path (14), comprises a primary length of optic fibre from an optical frequency source (12) to at least one optical splitter mean (16, respectively 17) followed by a plurality of secondary lengths of optic fibre from said optical splitter mean (16, respectively 17) to said plurality of input ports (2), respectively output ports (3), and at least one polarization maintaining amplifier, located in said secondary lengths of optic fibre.

10. Use of an optical packet switch according to any one of claims 1 to 9, whereby polarization division multiplexing is used.

## Patentansprüche

1. Optische Paketvermittlungseinrichtung mit einer ersten Vielzahl von Eingangsports (2), wobei jeder Eingangsport (2) einen optischen Übertragungsmodulator umfasst, einer zweiten Vielzahl von Ausgangsports (3), wobei jeder Ausgangsport (3) einen kohärenten optischen Empfangsdemodulator umfasst, und einer optischen Switch-Fabric (4), welche fähig ist, selektiv mindestens einen Eingangsport (2) mit mindestens einem Ausgangsport (3) optisch zu verbinden, **dadurch gekennzeichnet, dass** die besagte optische Paketvermittlungseinrichtung weiterhin mindestens eine optische Frequenzquelle (12) umfasst, wobei die besagte optische Frequenzquelle (12) über einen optischen Übertragungspfad (13) mit einem Satz von Eingangsports (2) verbunden ist, um deren optischen Übertragungsmodulatoren eine optische Modulationsfrequenz bereitzustellen, wobei die besagte optische Frequenzquelle (12) über einen optischen Empfangspfad (14) ebenfalls mit einem Satz von Ausgangsports (3) verbunden ist, um deren kohärenten optischen Empfangsdemodulatoren eine optische Demodulationsfrequenz bereitzustellen, welche im allgemeinen der besagten optischen Modulationsfrequenz entspricht, wobei der besagte Satz von Eingangsports (2) alle diejenigen Eingangsports (2) umfasst, welche über die besagte optische Switch-Fabric (4) in mindestens einer ihrer Schaltungskonfigurationen mit mindestens einem Ausgangsport (3) des besagten Satzes von Ausgangsports (3) verbunden werden können, und wobei der besagte Satz von Ausgangsports (3) alle diejenigen Ausgangsports (3) umfasst, welche über die besagte optische Switch-Fabric (4) in mindestens einer ihrer Schaltungskonfigurationen mit mindestens einem Eingangsport (2) des besagten Satzes von Eingangsports (2) verbunden werden können.

2. Optische Paketvermittlungseinrichtung nach Anspruch 1, wobei der besagte optische Übertragungspfad (13) und der besagte optische Empfangspfad (14) derart eingerichtet sind, dass die Laufzeit durch den besagten optischen Empfangspfad (14) der Laufzeit durch den besagten optischen Übertragungspfad (13) entspricht zuzüglich der Laufzeit durch die optische Switch-Fabric (4) entspricht.

3. Optische Paketvermittlungseinrichtung nach Anspruch 1 oder 2, wobei der optische Übertragungspfad (13) und der optische Empfangspfad (14) polarisationserhaltend sind.

4. Optische Paketvermittlungseinrichtung nach einem beliebigen der Ansprüche 1 bis 3, wobei Eingangsports (2) in Eingangsgruppen einer gegebenen Anzahl n von Eingangsports (2) zusammengefasst werden, wobei jedes i-te, i=1..n, Eingangsportsignal einer jeden der besagten Eingangsgruppen gemäß einer separaten optischen Modulationsfrequenz (λᵢ) moduliert wird, wobei jede besagte Eingangsgruppe einen optischen Frequenzmultiplexer (18, 25) umfasst, welcher fähig ist, alle Eingangsportsignale der besagten Eingangsgruppe in ein gemultiplextes optisches Signal (5) zu multiplexen, wobei die optische Switch-Fabric (4) dazu bestimmt ist, die besagten gemultiplexten optischen Signale (5) zu vermitteln, wobei Ausgangsports (3) in Ausgangsgruppen derselben gegebenen Anzahl n von Ausgangsports (3) zusammengefasst werden, wobei jedes i-te, i=1..n, Ausgangsportsignal einer jeden der besagten Ausgangsgruppen gemäß einer entsprechenden optischen Demodulationsfrequenz (λᵢ) demoduliert wird, wobei jede Ausgangsgruppe einen optischen Frequenzdemultiplexer (19, 26) umfasst, welcher fähig ist, ein gemultiplextes optisches Signal (6) in alle Ausgangsportsignale der besagten Ausgangsgruppe zu demultiplexen, wobei die besagte optische Paketvermittlungseinrichtung mindestens eine mit jeder optischen Frequenz (λᵢ, i=1..n) assoziierte optische Frequenzquelle (12, 12a-d) umfasst.

5. Optische Paketvermittlungseinrichtung nach Anspruch 4, wobei die optische Switch-Fabric (4) p gleichartige optische Koppelfelder (21, 22) umfasst, wobei p mindestens gleich zwei ist, welche über optische Frequenzmultiplexer (18, 23, 25) parallel mit der besagten ersten Vielzahl von Eingangsports (2) und über optische Frequenzdemultiplexer (19, 24, 26) mit der besagten zweiten Vielzahl von Ausgangsports (3) verbunden sind, wobei n den Wellenlängenmultiplex-Grad darstellt, wobei die besagten optischen Koppelfelder (21, 22) derart gesteuert werden, dass sie alternativ betrieben werden, wobei ein optisches Koppelfeld (21, 22) schaltet, während andere Koppelfelder (21, 22) übertragen.

6. Optische Paketvermittlungseinrichtung nach Anspruch 5, wobei jedes optische Koppelfeld (21, 22) dasselbe optische Modulations-/Demodulationsfrequenzraster (λᵢ) anwendet, wobei optische Koppelfelder (21, 22) über n x 1 optische Frequenzmultiplexer (18) und 1 x p Koppler (23) parallel mit der besagten ersten Vielzahl von Eingangsports (2) und über 1 x n optische Frequenzdemultiplexer (19) und p x 1 Schalter (24) mit der besagten zweiten Vielzahl von Ausgangsports (3) verbunden sind.

7. Optische Paketvermittlungseinrichtung nach Anspruch 5, wobei jedes optische Koppelfeld (21, 22) ein unterschiedliches optisches Modulations-/Demodulationsfrequenzraster (λᵢ) anwendet, wobei optische Koppelfelder (21, 22) über n x p optische Frequenzmultiplexer (25) parallel mit der besagten ersten Vielzahl von Eingangsports (2) und über p x n optische Frequenzdemultiplexer (26) direkt mit der besagten zweiten Vielzahl von Ausgangsports (3) verbunden sind.

8. Optische Paketvermittlungseinrichtung nach den Ansprüchen 1 bis 7, wobei jede optische Frequenzquelle (12) eine primäre optische Dauerstrich-Laser-Frequenzquelle (12a-12d) und mindestens eine sekundäre optische Dauerstrich-Laser-Frequenzquelle (12a'-12d') derselben optischen Frequenz umfasst, wobei die besagte mindestens eine sekundäre optische Dauerstrich-Laser-Frequenzquelle (12a'-12d') bereitsteht, um die besagte primäre optische Dauerstrich-Laser-Frequenzquelle (12a-12d) im Fall einer Störung zu ersetzen.

9. Optische Paketvermittlungseinrichtung nach den Ansprüchen 1 bis 8, wobei ein optischer Übertragungspfad (13) beziehungsweise ein optischer Empfangspfad (14) eine primäre optische Faserlänge von einer optischen Frequenzquelle (12) bis mindestens zu einem optischen Teilermittel (16, beziehungsweise 17), gefolgt von einer Vielzahl von sekundären optischen Faserlängen von dem besagten optischen Teilermittel (16, beziehungsweise 17) bis zu der besagten Vielzahl von Eingangsports (2), beziehungsweise Ausgangsports (3) sowie mindestens einen in den besagten sekundären optischen Faserlängen angeordneten Polarisationserhaltungsverstärker umfasst.

10. Verwendung einer optischen Paketvermittlungseinrichtung gemäß einem beliebigen der Ansprüche 1 bis 9, wobei Polarisationsmultiplex verwendet wird.

## Revendications

1. Commutateur de paquets optique, comprenant une première pluralité de ports d'entrée (2), chaque port d'entrée (2) comprenant un modulateur d'émission optique, une deuxième pluralité de ports de sortie (3), chaque port de sortie (3) comprenant un démodulateur de réception cohérent optique, et une matrice de commutation optique (4) capable de lier optiquement de manière sélective au moins un port d'entrée (2) avec au moins un port de sortie (3), ***caractérisé en ce que*** ledit commutateur de paquets optique comprend en outre au moins une source de fréquence optique (12), ladite source de fréquence optique (12) étant connectée par le biais d'un trajet optique d'émission (13) à un ensemble de ports d'entrée (2) afin de délivrer à leurs modulateurs d'émission optiques une fréquence optique de modulation, ladite source de fréquence optique (12) étant également connectée par le biais d'un trajet optique de réception (14) à un ensemble de ports de sortie (3) avec de délivrer à leurs démodulateurs de réception cohérents optiques une fréquence optique de démodulation généralement égale à ladite fréquence optique de modulation, ledit ensemble de ports d'entrée (2) comprenant tous les ports d'entrée (2) qui peuvent être liés à travers ladite matrice de commutation optique (4), dans au moins l'une de ses configurations de commutation, à au moins un port de sortie (3) dudit ensemble de ports de sortie (3), et ledit ensemble de ports de sortie (3) comprenant tous les ports de sortie (3) qui peuvent être liés à travers ladite matrice de commutation optique (4), dans au moins l'une de ses configurations de commutation, à au moins un port d'entrée (2) dudit ensemble de ports d'entrée (2).

2. Commutateur de paquets optique selon la revendication 1, avec lequel ledit trajet optique d'émission (13) et ledit trajet optique de réception (14) sont tels que le temps de trajet à travers ledit trajet optique de réception (14) est égal au temps de trajet à travers ledit trajet optique d'émission (13) plus le temps de trajet à travers la matrice de commutation optique (4).

3. Commutateur de paquets optique selon la revendication 1 ou 2, avec lequel les trajets optiques d'émission (13) et les trajets optiques de réception (14) sont à maintien de la polarisation.

4. Commutateur de paquets optique selon l'une quelconque des revendications 1 à 3, avec lequel les ports d'entrée (2) sont assemblés en groupes d'entrées d'un nombre n donné de ports d'entrée (2), chaque i^{ème}, i = 1..n, signal de port d'entrée de chacun desdits groupes d'entrées étant modulé conformément à une fréquence de modulation optique (λᵢ) séparée, chacun desdits groupes d'entrées comprenant un multiplexeur de fréquence optique (18, 25) capable de multiplexer tous les signaux de port d'entrée dudit groupe d'entrées en un signal optique multiplexé (5), la matrice de commutation optique (4) étant conçue pour commuter lesdits signaux optiques multiplexés (5), les ports de sortie (3) étant assemblés en groupes de sorties du même nombre n donné de ports de sortie (3), chaque i^{ème}, i = 1..n, signal de port de sortie de chacun desdits groupes de sorties étant démodulé conformément à une fréquence de démodulation optique (λᵢ) séparée, chacun desdits groupes de sorties comprenant un démultiplexeur de fréquence optique (19, 26) capable de démultiplexer un signal optique multiplexé (6) dans tous les signaux de port de sortie dudit groupe de sorties, ledit commutateur de paquets optique comprenant au moins une source de fréquence optique (12, 12a-d) associée à chaque fréquence optique (λᵢ i = 1..n).

5. Commutateur de paquets optique selon la revendication 4, avec lequel la matrice de commutation optique (4) comprend p matrices de commutation optiques (21, 22) similaires, p étant au moins égal à deux, branchées en parallèle avec ladite première pluralité de ports d'entrée (2) par le biais de multiplexeurs de fréquence optique (18, 23, 25) et avec ladite deuxième pluralité de ports de sortie (3) par le biais de démultiplexeurs de fréquence optique (19, 24, 26), n étant le degré de multiplexage par division de longueur d'onde, lesdites matrices de commutation optiques (21, 22) étant commandées pour fonctionner en alternance lorsqu'une matrice de commutation optique (21, 22) commute pendant que les autres matrices (21, 22) émettent.

6. Commutateur de paquets optique selon la revendication 5, avec lequel chaque matrice de commutation optique (21, 22) emploie la même grille de fréquence optique (λᵢ) de modulation/démodulation, les matrices de commutation optiques (21, 22) étant branchées en parallèle avec ladite première pluralité de ports d'entrée (2) par le biais de n x 1 multiplexeurs de fréquence optique (18) et 1 x p coupleurs (23), et avec ladite deuxième pluralité de ports de sortie (3) par le biais de 1 x n démultiplexeurs de fréquence optique (19) et p x 1 commutateurs (24).

7. Commutateur de paquets optique selon la revendication 5, avec lequel chaque matrice de commutation optique (21, 22) emploie une grille de fréquence optique (λᵢ) de modulation/démodulation différente, les matrices de commutation optiques (21, 22) étant branchées en parallèle avec ladite première pluralité de ports d'entrée (2) par le biais de n x p multiplexeurs de fréquence optique (25) et avec ladite deuxième pluralité de ports de sortie (3) directement par le biais de p x n démultiplexeurs de fréquence optique (26).

8. Commutateur de paquets optique selon l'une des revendications 1 à 7, avec lequel chaque source de fréquence optique (12) comprend une source de fréquence optique primaire (12a-12d) à laser à onde entretenue et au moins une source de fréquence optique secondaire (12a'-12d') à laser à onde entretenue de la même fréquence optique, ladite au moins une source de fréquence optique secondaire (12a'-12d') à laser à onde entretenue étant prête à remplacer ladite source de fréquence optique primaire (12a-12d) à laser à onde entretenue en cas de défaillance.

9. Commutateur de paquets optique selon l'une des revendications 1 à 8, avec lequel un trajet optique d'émission (13) ainsi qu'un trajet optique de réception (14) comprennent respectivement une longueur primaire de fibre optique depuis une source de fréquence optique (12) vers au moins un moyen de division optique (16 ou 17) suivie par une pluralité de longueurs secondaires de fibre optique depuis ledit moyen de division optique (16 ou 17) vers lesdites pluralités respectives de ports d'entrée (2) et de ports de sortie (3), et au moins un amplificateur de maintien de la polarisation situé dans lesdites longueurs secondaires de fibre optique.

10. Utilisation d'un commutateur de paquets optique selon l'une des revendications 1 à 9, le multiplexage par division de polarisation étant utilisé.
